# EUROPEAN PATENT APPLICATION

(11) **EP 4 362 472 A1**
(43) Date of publication of application: **01.05.2024**
(21) Application number: 22203623.8
(22) Date of filing: 25.10.2022
(51) Int. Cl.: H04N 21/414, G01C 21/20, H04N 21/81, H04W 4/02

(54) **PLATFORM FOR PRODUCING AND UTILIZING AR/VR-BASED CONTENT**

(30) Priority: 24.10.2022 KR 20220137834
(71) Applicant: Thes Co., Ltd., Daejeon 34127 (KR)
(72) Inventor: Lee, Mingu, 34127 Daejeon (KR)
(74) Representative: Gulde & Partner

(57) **Abstract**

Provided is a platform for producing and utilizing content based on augmented reality (AR)/virtual reality (VR), the platform including a content production unit configured to produce a content based on a user and to transmit the produced content to a server; the server configured to manage the produced content with information of the user and to provide the same to an authenticated user device for utilization of augmented reality (AR) or virtual reality (VR); and the user device configured to implement AR or VR and to provide the implemented AR or VR to the user.

## Description

### Cross-Reference to Related Application

This application claims priority to Korea Patent Application No. 10-2022-0137834, filed October 24, 2022. The contents of the above applications are incorporated by reference in their entirety.

### Field of the Invention

Example embodiments relate to a platform for producing and utilizing augmented reality/virtual reality (AR/VR)-based content.

### Description of the Related Art

Currently, there is a high interest in the field of enhancing business feasibility using various types of contents. For example, beyond simply providing videos or holding performances with respect to movies, animations, performances, concerts, and characters, there are many cases for selling goods using a character that appears in a corresponding movie, animation, or performance or an artist of a concert, or making continuous revenues through a social network service (SN) or a video channel.

As such, although techniques using movies, animations, performances, concerts, and characters are increasing, the techniques are still being used in limited technical fields.

Also, if corresponding viewing is satisfactory even after actual viewing, there may be a high desire to remember or feel an emotion again. However, it is a situation that cannot but be satisfied with an evidence shot taken at a corresponding location.

Therefore, there is a need for an augmented reality/virtual reality (AR/VR)-based content production and utilization platform that allows users to experience a variety of pleasures while viewing movies, performances, concerts, sports, etc., and to experience impressive viewing again.

### Summary of the Invention

At least one example embodiment provides an augmented reality/virtual reality (AR/VR)-based content production and utilization platform that allows users to experience a more variety of pleasures when viewing movies, performances, concerts, sports, etc., while using user-related content and event-related content and to experience impressive viewing again.

The objectives and other objectives may be achieved from the following description of example embodiments.

An aspect of at least one example embodiment relates to an AR/VR-based content production and utilization platform.

According to an example embodiment, the AR/VR-based content production and utilization platform includes a content production unit configured to produce content based on a user and to transmit the produced content to a server; the server configured to manage the produced content with information of the user and to provide the same to an authenticated user device for AR or VR utilization; and the user device configured to implement AR or VR and to provide the implemented AR or VR to the user.

The content production unit may include a camera module configured to create shooting content by photographing the user; a production communication module configured to perform data communication with at least one of the server and the user device ; a production module configured to produce production content required for AR or VR implementation from at least one of the shooting content photographed by the camera module, transmission content transmitted from the user device, and event-related host content; a production display module configured to display at least one of information required for the user, the shooting content, the transmission content, and the production content; and an input module configured to receive user information from the user.

The user information may include at least one of personal information, user device information, event information, and user seat information.

The user information may be collected by the input module of the content production unit, and the input module may include at least one of a touch panel and a recognition camera.

In the AR/VR-based content production and utilization platform, the recognition camera may collect at least one of the personal information, the user device information, the event information, and the user seat information from at least one of an event ticket and a web and a server linked from the event ticket.

The server may include at least one of a database module configured to manage production content, user information, and user device information; an authentication module configured to transmit an authentication code to the user device based on information of the database module; a location information module configured to manage location information of the user device; and a server communication module configured to communicate with the content production unit and the user device.

The user device may include at least one of a mobile device, an AR device, and a VR device.

The mobile device may be a smartphone, and the mobile device may include at least one of a device communication module configured to communicate with the content production unit and the server; a mobile camera module; an AR implementation module configured to implement an AR image or video in an image and/or or a video collected in real time by the mobile camera module; a mobile location module configured to collect location information of the mobile device; and a mobile display module configured to display the AR image or video implemented by the AR implementation module and information required for the user.

The AR/VR-based content production and utilization platform may further include a location sign configured to set a location standard of the user device. The mobile location module may be configured to calculate a location of the user device based on the location sign.

The location sign may include at least one combination of a beacon, a near field communication (NFC), a barcode, a quick read (QR) code, and a color.

The AR implementation module may be configured to implement at least one of production content and event content that is provided based on event information using AR.

Event information may include a map of a corresponding event venue, and the AR implementation module may be configured to implement AR of guiding the user to a specific place based on the map and location information of the user device.

The specific place may include at least one of a seat of the user, a restroom, a food store, and a goods store.

The mobile device may further include a movement path module configured to verify a movement path from the mobile location module and to store or manage the verified movement path.

The AR/VR-based content production and utilization platform may further include a screen reference sign configured to display a screen image or a screen video on AR.

The screen reference sign may be a combination of a specified image and a color.

A number of the screen reference signs may be four.

The AR implementation module may be configured to implement the screen image or the screen video in a rectangular area using the four screen reference signs as the respective vertices, and the screen image or the screen video may be rendered to correspond to the rectangular area.

The camera module may include at least two shooting cameras, and the production module may be configured to provide the production content that is rendered into a three-dimensional (3D) image from at least two images or videos collected from the at least two shooting cameras.

The user device may be an AR device, and the AR device may include at least one of an AR communicator configured to communicate with the content production unit and the server; an AR display module of a transparent material configured to display AR for the user; an AR implementation module configured to implement an AR image or video on the AR display module; and an AR location module configured to collect location information of the AR device.

The user device may be a VR device, and the VR device may include at least one of a VR communicator configured to communicate with the content production unit and the server; a VR display module configured to display VR for the user; a VR implementation module configured to implement VR on the VR display module; and a microphone module configured to collect audio of the user.

The VR implementation module may be configured to provide the VR along a movement path through which the user moves based on a map and a user movement path of a movement path module, and to provide at least one of event content provided based on event information, production content, and host content.

Event content provided from the VR implementation module may be provided from at least one of a specific web and the server at a specific time, and the user connected to the web or the server may be allowed to readily navigate while controlling movement of production content in a VR space.

Sound collected from the microphone module may be provided to another user in a short distance based on a VR space, based on a distance between users connected to the web or the server.

The sound provided to the other user may be provided at a volume that is inversely proportional to a square of a distance from the other user.

The short distance may be 30 m to 50 m.

According to some example embodiments, there may be provided an AR/VR-based content production and utilization platform that allows users to experience a more variety of pleasures when viewing movies, performances, concerts, sports, etc., while using user-related content and event-related content and to experience impressive viewing again.

Further areas of applicability will become apparent from the description provided herein. The description and specific examples in this summary are intended for purposes of illustration only and are not intended to limit the scope of the present disclosure.

### Brief description of Drawings

These and/or other aspects, features, and advantages of the invention will become apparent and more readily appreciated from the following description of embodiments, taken in conjunction with the accompanying drawings of which:
FIG. 1 illustrates an example of an augmented reality/virtual reality (AR/VR)-based content production and utilization platform according to an example embodiment;
FIG. 2 is a diagram illustrating an example of a content production unit according to an example embodiment;
FIG. 3 is a diagram illustrating an example of a server according to an example embodiment;
FIG. 4 is a diagram illustrating an example of a mobile device according to an example embodiment;
FIG. 5 illustrates an example of a location sign that that serves as a reference for a location of a user device according to an example embodiment;
FIGS. 6 and 7 illustrate examples of AR that guides a user to a specific place according to an example embodiment;
FIG. 8 illustrates an example of displaying an image or a video according to a screen reference sign according to an example embodiment;
FIG. 9 is a diagram illustrating an example of an AR device according to an example embodiment;
FIG. 10 is a diagram illustrating an example of a VR device according to an example embodiment;
FIG. 11 illustrates an example of an operation among a mobile device or an AR device, a content production unit, and a server according to an example embodiment; and
FIG. 12 illustrates an example of an operation among a VR device, a content production unit, and a server according to an example embodiment.

### Detailed description of the Invention

Hereinafter, example embodiments will be described in detail with reference to the accompanying drawings. However, technology disclosed set forth herein may be implemented in another form without being limited to the example embodiments.

Here, the example embodiments are provided such that the disclosed contents may become thorough and complete and the spirit of the present application may be sufficiently conveyed to one skilled in the art. In the drawings, sizes of components, such as widths, thicknesses, etc., are slightly enlarged to clearly express components of each device. Also, although only some of the components are illustrated for clarity of description, one skilled in the art may easily verify remaining of the components.

When describing the drawings as a whole, the description is made from a point of view of an observer. When one component is described as being located above or below another component, it indicates that the one component is located directly above or below the other component or that an additional component may be interposed between the elements. Also, one of ordinary skill in the art may implement the spirit of the present application in various other forms without departing from the technical spirit of the present application. Also, like reference numerals in the drawings refer to like elements throughout.

As used herein, the singular forms "a," "an," and "the" are intended to include the plural forms as well, unless the context clearly indicates otherwise and it will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Also, as used herein, "X to Y" representing the range indicates "X or more and Y or less."

Herein, the term "portion" includes a unit implemented by hardware, a unit implemented by software, and a unit implemented using both. Also, a single unit may be implemented using two or more hardware and at least two units may be implemented using one hardware. Also, "∼ portion" is not limited to software or hardware and may be configured to be present in an addressable storage medium or to reproduce one or more processors. Therefore, for example, "∼ portion" includes components, such as software components, object-oriented software components, class components, and task components, processes, functions, attributes, procedures, sub-routines, segments of a program code, drivers, firmware, microcode, circuits, data, databases, data structures, tables, arrays, and variables. Functions provided within "-portions" and the components may be combined into a smaller number of components and "-portions" or may be further divided into addition components and "-portions." In addition, the components and "-portions" may be implemented to reproduce one or more central processing units (CPUs) within a device or a secure multimedia card.

Also, "network" or "communication" may be implemented as a wired network, such as a local area network (LAN), a wide area network (WAN), and a value added network (VAN), or any types of wireless networks, such as a mobile radio communication network and a satellite communication network.

Herein, content and an image may include an image and a video.

Herein, a camera module configured to photograph a user and a recognition camera configured to receive information may be performed through the same configuration and may also be performed through different configurations.

Components of a device set forth herein may be implemented by a program or an application installed in the device.

Herein, an AR device and a VR device may directly communicate with a server and may communicate with the server through a mobile device.

Herein, a space implemented in a VR implementation module may be transmitted from the server or may be received from a separate server of an entity that holds a corresponding event.

### AR/VR-based content production and utilization platform

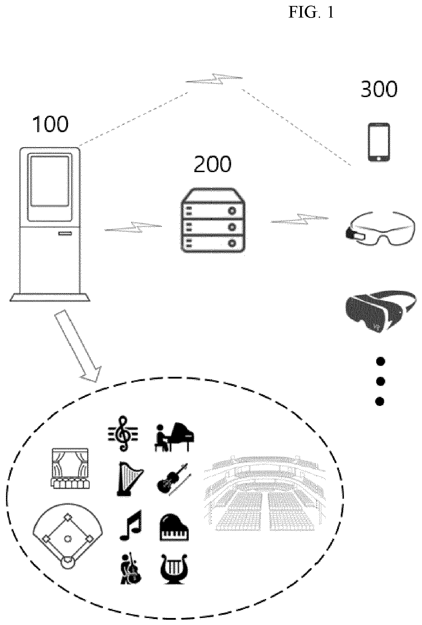

An AR/VR-based content production and utilization platform according to an example embodiment is described with reference to FIGS. 1 to 10.

Referring to FIG. 1, an AR/VR-based content production and utilization platform according to an example embodiment includes a content production unit 100 configured to produce content based on a user and to transmit the produced content to a server 200; the server 200 configured to manage the produced content with information of the user and to provide the same to an authenticated user device 300 for AR or VR utilization; and the user device 300 configured to implement AR or VR and to provide the implemented AR or VR to the user.

The AR/VR-based content production and utilization platform may provide a variety of pleasures to a user viewing a movie, a performance, a concert, sports, etc., by creating production content through the content production unit 100 and by providing AR in a viewing place using the production content and may allow the user to feel and remember again the emotion of the corresponding viewing by providing VR as similar as possible to an environment in which the user has experienced in the corresponding viewing place.

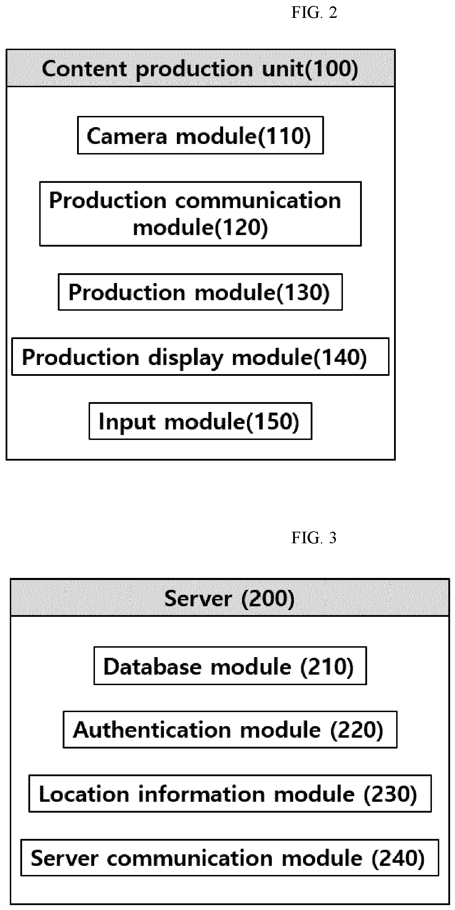

Referring to FIG. 2, the content production unit 100 may include a camera module 110 configured to create shooting content by photographing the user; a production communication module 120 configured to perform data communication with at least one of the server 200 and the user device 300; a production module 130 configured to produce production content required for AR or VR implementation from at least one of the shooting content photographed by the camera module 110, transmission content transmitted from the user device 300, and event-related host content; a production display module 140 configured to display at least one of information required for the user, the shooting content, the transmission content, and the production content; and an input module 150 configured to receive user information from the user.

The camera module 110 may include at least two shooting cameras, and the production module 130 may provide the production content that is rendered into a 3D image from at least two images or videos collected from the at least two shooting cameras.

In detail, for example, the at least two shooting cameras may be horizontally provided left and right, or may be vertically provided in an upper portion and a lower portion. Alternatively, two shooting cameras may be horizontally provided in an upper portion and one shooting camera may be provided in a lower portion. Alternatively, two shooting cameras may be horizontally provided in an upper portion and two shooting cameras may be horizontally provided in a lower portion.

Rendering may be performed using a known method, which is not particularly limited.

The production communication module 120 serves to perform data communication with at least one of the server 200 and the user device 300. The transmission content may be provided from the user device 300 to the server 200 or the content production unit 100 through the production communication module 120. The production module 130 may produce the production content using all of the transmission content and the shooting content.

In detail, the production module 130 serves to produce the production content required for AR or VR implementation from at least one of the shooting content photographed by the camera module 110, the transmission content transmitted from the user device 300, and the event-related host content.

The host content may be an image or a video provided from a corresponding event and may be produced and provided by an administrator of the AR/VR-based content production and utilization platform. The event may include, for example, viewing a movie, a performance, a concert, sports, and the like.

For example, the host content may be an image or a video of a movie protagonist, a performance protagonist, a concert singer, a sports star, and the like.

The production display module 140 may display at least one of information required for the user, the shooting content, the transmission content, the host content, and the production content, and may provide a touchscreen in response to an input of necessary information into the input module 150 from the user.

The input module 150 serves to receive the user information from the user. The user information may include at least one of personal information, user device information, event information, and user seat information.

In detail, for example, the user information may be collected by the input module 150 of the content production unit 100, and the input module 150 may include at least one of a touch panel and a recognition camera (not shown).

When the input module 150 is the touch panel, the user may input the user information by referring to a screen displayed on the production display module 140.

When the input module 150 is the recognition camera, the user may input the user information through an event ticket.

In detail, in the AR/VR-based content production and utilization platform, the recognition camera may collect at least one of the personal information, the user device information, the event information, and the user seat information from at least one of the event ticket and a web and a server linked from the event ticket.

For example, the content production unit 100 may be provided in a form of a kiosk.

Referring to FIG. 3, the server 200 may include at least one of a database module 210 configured to manage the production content, the user information, and information of the user device 300; an authentication module 220 configured to transmit an authentication code to the user device 300 based on information of the database module 210; a location information module 230 configured to manage location information of the user device 300; and a server communication module 240 configured to communicate with the content production unit 100 and the user device 300.

The database module 210 serves to manage all of the user information and information of the user device 300 input from the input module 150.

The authentication module 220 serves to transmit the authentication code to the user device 300 based on information of the database module 210. By authenticating the user with the authentication code, the user may use an AR/VR-based content production and utilization platform service of the present invention through a program installed in the user device 300. In detail, the production content, a map described after event content, user device location information, movement path information, and the like may be provided through the user device 300 that is authenticated through the authentication code and AR implementation and VR implementation may be performed accordingly.

The location information module 230 serves to manage location information of the user device 300. The location information of the user device 300 may be created through the following location sign component. Location information of the user may be managed by the user device 300 and may also be managed by the server 200.

The server communication module 240 serves to communicate with the content production unit 100 and the user device 300.

The user device 300 may include at least one of a mobile device 310, an AR device 330, and a VR device 350.

In detail, for example, the mobile device 310 and the AR device 330 may serve to provide AR to the user in an event venue and, after the event, the VR device 350 may provide VR similar to the AR-implemented event to the user in a separate space.

Hereinafter, cases in which the user device 300 is the mobile device 310, the user device 300 is the AR device 330, and the user device 300 is the VR device 350 are separately described. Here, a similar component may perform a similar role.

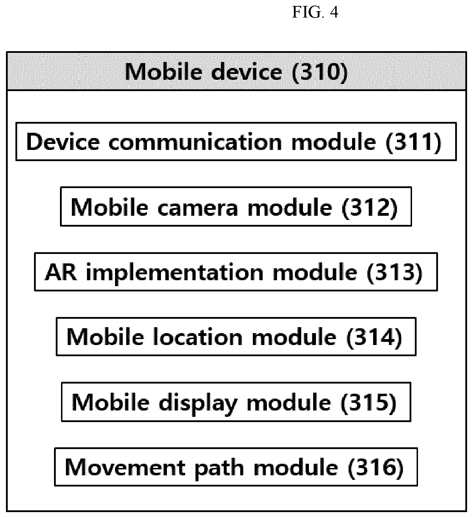

Referring to FIG. 4, in an example embodiment, the mobile device 310 may be a smartphone and the mobile device 310 may include at least one of a device communication module 311 configured to communicate with the content production unit 100 and the server 200; a mobile camera module 312; an AR implementation module 313 configured to implement an AR image or video in an image and/or a video collected in real time by the mobile camera module 312; a mobile location module 314 configured to collect location information of the mobile device 310; and a mobile display module 315 configured to display the AR image or video implemented by the AR implementation module 313 and information required for the user.

The device communication module 311 serves to communicate with the content production unit 100 and the server 200.

The mobile camera module 312 may use a camera provided to the smartphone and a screen collected through this may be a background of AR implementation. Also, the mobile camera module 312 may photograph and recognize a location sign 400 and a screen reference sign 500 that are described below.

The AR implementation module 313 may implement the AR image or video in the image and/or the video collected in real time by the mobile camera module 312. The AR implementation module 313 may implement at least one of the production content and the event content provided based on the event information, using AR.

Alternatively, the implemented AR image or video may include the production content produced by the content production unit 100, the host content, and the event content.

The event content refers to content related to the event and may include at least one of a movie plot, a movie preview, a performance plot, a performance preview, a concert video, and a sports highlight video.

For reference, although the event used herein describes viewing a movie, a performance, a concert, sports, etc., the event may include any types of events in which the user may view various types of festivals, expos, demonstrations, and the like.

The mobile location module 314 serves to collect location information of the mobile device 310 and may collect the location information through the location sign 400 to be described below.

The mobile display module 315 may serve to display the AR image or video implemented by the AR implementation module 313 and information required for the user.

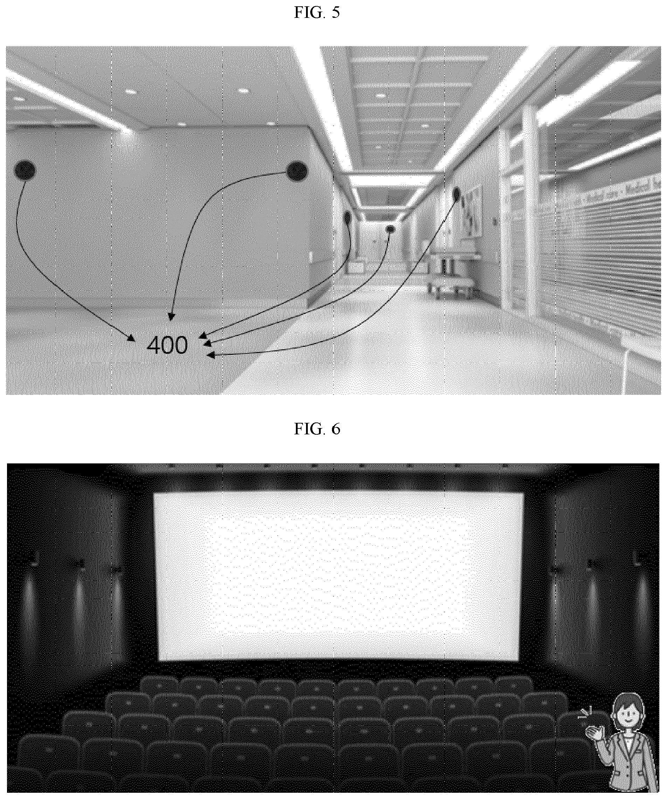

Referring to FIG. 5, the AR/VR-based content production and utilization platform may further include the location sign 400 configured to set a location standard of the user device 300. The mobile location module 314 may calculate a location of the user device 300 from the location sign 400. The location sign 400 may include at least one combination of a beacon, a near field communication (NFC), a barcode, a quick read (QR) code, and a color.

Each location sign 400 may be differently manufactured to include specific information and specific place information may include information on a location at which the corresponding location sign 400 is provided. The location information may also include information linked to a map, which is described below.

Through the component, i.e., the location sign 400, location information of the corresponding mobile device 300 may be created through an image of the location sign 400 collected from the mobile camera 312 while the user experiences AR and the created location information may be managed by the location information module 230 or the mobile location module 314.

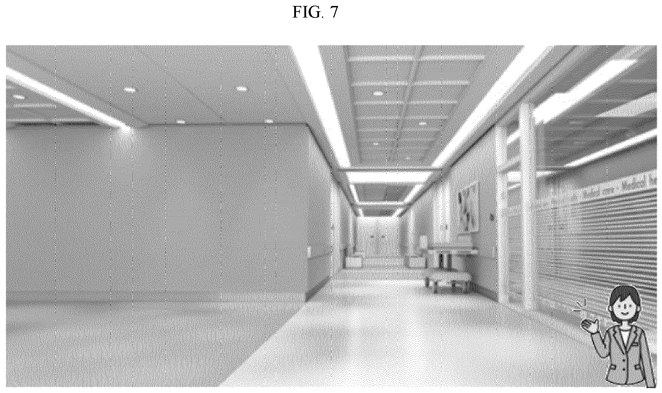

Referring to FIGS. 6 and 7, the event information may include a map of a corresponding event venue and the AR implementation module 313 may implement AR of guiding the user to a specific place based on the map and the location information of the user device 300.

FIG. 6 illustrates an example of an AR video that guides the user to a seat and FIG. 7 illustrates an example of an AR video that guides the user to another specific place. The specific place may include at least one of a seat of the user, restroom, a food store, and a goods store, but is not limited thereto.

The mobile device 300 may further include a movement path module 316 configured to verify a movement path from the mobile location module 314 and to store and manage the verified movement path.

In the case of a movement path of the mobile device 300 of the movement path module 316, when VR is provided to the user by the VR device 350, the VR may be provided along a path through which the user moves at a corresponding event and emotions felt by the user at the time of the event may be conveyed as similarly as possible accordingly.

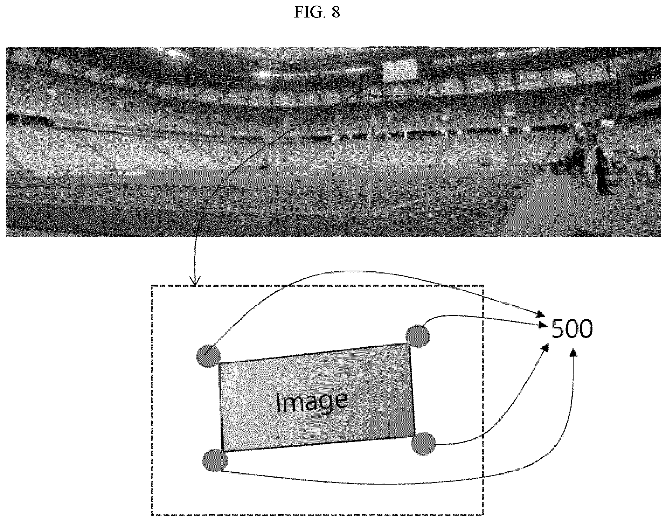

Referring to FIG. 8, the AR/VR-based content production and utilization platform may further include the screen reference sign 500 configured to display a screen image or a screen video on AR. The screen reference sign 500 may be a combination of a specified image and color. A number of the screen reference signs 500 may be four.

In detail, for example, the AR implementation module 313 may implement the screen image or the screen video in a rectangular area using the four screen reference signs 500 as the respective vertices. Here, the screen image or the screen video may be rendered to correspond to the rectangular area.

When the screen reference signs 500 are collected by the mobile camera during AR experience of the user, an image of another channel may be used within an AR screen by displaying a predetermined image, video, advertising, necessary information, etc., in the rectangular area formed by the screen reference sign 500.

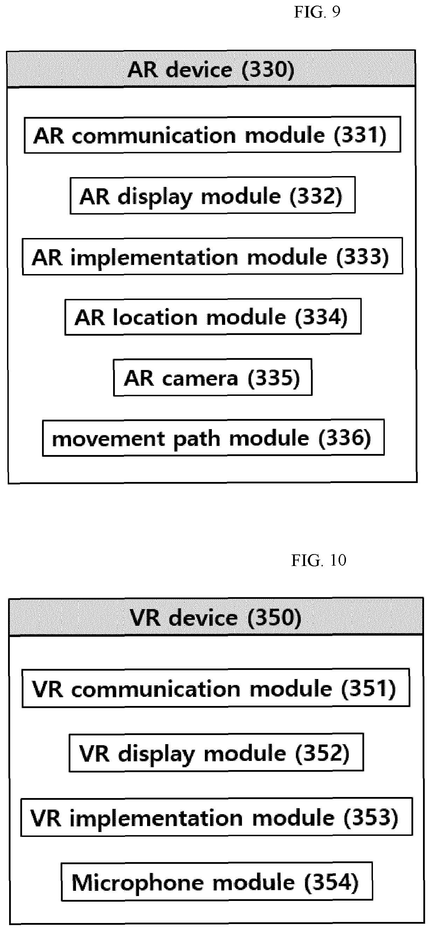

Referring to FIG. 9, the user device 300 may be the AR device 330 and the AR device 330 may include at least one of an AR communicator 331 configured to communicate with the content production unit 100 and the server 200; an AR display module 332 of a transparent material configured to display AR for the user; an AR implementation module 333 configured to implement an AR image or video on the AR display module 332; and an AR location module 334 configured to collect location information of the mobile device 300.

Also, the AR device 330 may further include a movement path module 336 configured to verify a movement path from the AR camera 335 and the AR location module 334 and to store and manage the verified movement path.

The AR device 330 may be a device for implementing AR, such as AR goggles.

In the AR device 330, the AR display module 332 may be formed of a transparent material and, other than that the user directly views a real image with eyes of the user instead of using the AR camera 335, other components may perform the substantially same roles as corresponding components of the mobile device 310.

Referring to FIG. 10, the user device 300 may be the VR device 350 and the VR device 350 may include at least one of a VR communicator 351 configured to communicate with the content production unit 100 and the server 200; a VR display module 352 configured to display VR for the user; a VR implementation module 353 configured to implement the VR on the VR display module 352; and a microphone module 354 configured to collect audio of the user.

The VR communicator 351 and the VR display module 352 may perform the substantially same roles as components corresponding to the mobile device 310.

In an example embodiment, the VR implementation module 353 may provide the VR along a movement path through which the user moves based on the map or a movement path of the user device 300 verified from the movement path module 316, 336 of the mobile device 310 or the AR device 330 and may provide at least one of the event content provided based on the event information, the production content, and the host content.

Here, a virtual space of the VR provided from the VR implementation module 353 may be an event venue. The virtual space may be provided from the server 200 of the AR/VR-based content production and utilization platform and may be provided from a server of an entity that holds the event.

In another example embodiment, the event content provided from the VR implementation module 353 may be provided from at least one of a specific web (e.g., a web or a server of the entity holding the corresponding event) and the server 200 at a specific time and the user connected to the web or the server 200 may readily navigate while controlling movement of production content in a VR space. By providing the event content at a specific time, many users may be simultaneously invited to the VR space at the specific time and this configuration enables the user to further feel a sense of presence.

Here, in the VR space, the user may be implemented to move the production content through the movement path verified from the movement path module 316, 336. The VR implementation module 353 may provide a new pleasure such that the user experiences the VR while viewing a movement of the production content of the user from the perspective of a third party.

The microphone module 354 serves to collect audio of the user and ambient sound while the user is experiencing the VR.

The AR/VR-based content production and utilization platform may provide sound collected from the microphone module 354 to another user in a short distance based on the VR space, based on a distance between users connected to the web or the server 200. Through this configuration, the user may communicate with other users simultaneously connected to the web or the server 200 and a sense of presence may be improved by sharing the sound of enthusiasm for the corresponding event.

Here, the AR/VR-based content production and utilization platform may provide the sound provided to the other user at a volume that is inversely proportional to a square of a distance from the other user. The distance is based on a distance in the VR space and the short distance may be 30 m to 50 m.

Hereinafter, a configuration and an operation of the present invention according to example embodiments will be described in detail. However, it is provided as an example only and it should be understood that the present invention is not limited thereto.

Here, contents not disclosed herein may be sufficiently technically induced by one skilled in the art and the description related thereto is omitted.

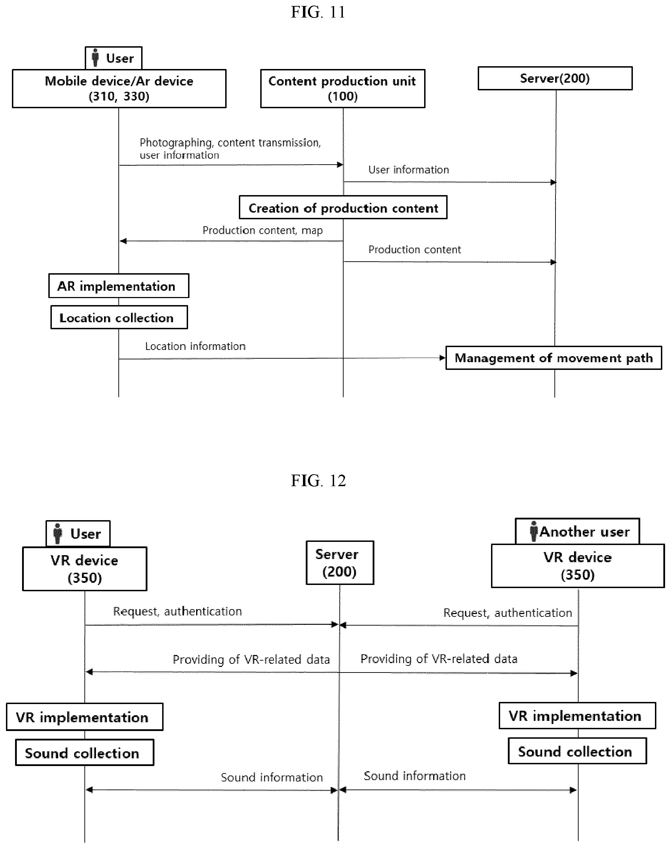

Referring to FIG. 11, a user holding the mobile device 310 and/or the AR device 330 performs photographing using the content production unit 100, creates shooting content or provides a pre-image that is transmission content, and inputs user information. The user information may be managed by the database module 210 of the server 200. The content production unit 100 creates AR-based production content using at least one of the shooting content and the transmission content. The production content may provide a map corresponding to a place in which the event is ongoing through the mobile device 310 or the AR device 330. Also, the production content may be managed with the user information by the database module 210 of the server 200. Also, the production content may be transmitted to the mobile device 310 and/or an SNS of the user based on the user information. The user may experience AR implemented in an event venue using the map and the production content. At the same time, location information of the mobile device 310 or the AR device 330 may be collected and may be stored and managed by the movement path module 316, 336 and the location information module 230 of the server 200.

Referring to FIG. 12, the user and the other user may transmit a VR service request to the server 200 and may receive VR-related data through user authentication. The VR-related data may provide at least one of the event content provided based on the event information, the production content, and the host content, in addition to VR space data. The event content refers to event-related data of the corresponding event and may include at least one of a movie plot, a movie preview, a performance plot, a performance preview, a concert video, and a sports highlight video. In an example embodiment, the VR may be provided along a movement path through which the user moves based on the location information module 230. In another example embodiment, the VR may provide a VR video in which the production content moves in the VR space along the movement path of the user based on the location information module 230. The user and the other user may experience the VR that is implemented using the VR-related data and sound collected through a microphone provided to the VR device 350 may be shared between the user and the other user.

Although a number of example embodiments have been described above, it will be apparent to one of ordinary skill in the art that various alterations and modifications in form and details may be made in these example embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A platform for producing and utilizing content based on augmented reality (AR)/virtual reality (VR), the platform comprising:
a content production unit configured to produce content based on a user and to transmit the produced content to a server;
the server configured to manage the produced content with information of the user and to provide the same to an authenticated user device for AR or VR utilization; and
the user device configured to implement AR or VR and to provide the implemented AR or VR to the user.

2. The platform of claim 1, wherein the content production unit comprises:
a camera module configured to create shooting content by photographing the user;
a production communication module configured to perform data communication with at least one of the server and the user device ;
a production module configured to produce production content required for AR or VR implementation from at least one of the shooting content photographed by the camera module, transmission content transmitted from the user device, and event-related host content;
a production display module configured to display at least one of information required for the user, the shooting content, the transmission content, and the production content; and
an input module configured to receive user information from the user.

3. The platform of claim 2, wherein the user information comprises at least one of personal information, user device information, event information, and user seat information,
the user information is collected by the input module of the content production unit, and
the input module comprises at least one of a touch panel and a recognition camera.

4. The platform of claim 3, wherein the recognition camera collects at least one of the personal information, the user device information, the event information, and the user seat information from at least one of an event ticket and a web and a server linked from the event ticket.

5. The platform of claim 3, wherein the server comprises at least one of:
a database module configured to manage production content, user information, and user device information;
an authentication module configured to transmit an authentication code to the user device based on information of the database module;
a location information module configured to manage location information of the user device; and
a server communication module configured to communicate with the content production unit and the user device.

6. The platform of claim 1, wherein the user device comprises at least one of a mobile device, an AR device, and a VR device.

7. The platform of claim 1, wherein the mobile device is a smartphone, and
the mobile device comprises at least one of:
a device communication module configured to communicate with the content production unit and the server;
a mobile camera module;
an AR implementation module configured to implement an AR image or video in an image and/or or a video collected in real time by the mobile camera module;
a mobile location module configured to collect location information of the mobile device; and
a mobile display module configured to display the AR image or video implemented by the AR implementation module and information required for the user.

8. The platform of claim 1, further comprising:
a location sign configured to set a location standard of the user device,
wherein the mobile location module is configured to calculate a location of the user device based on the location sign.

9. The platform of claim 8, wherein the location sign comprises at least one combination of a beacon, a near field communication (NFC), a barcode, a quick read (QR) code, and a color.

10. The platform of claim 7, wherein the AR implementation module is configured to implement at least one of production content and event content that is provided based on event information using AR
